# EUROPEAN PATENT SPECIFICATION

(11) **EP 1 693 400 B1**
(45) Date of publication and mention of the grant of the patent: **18.01.2012**
(21) Application number: 04819968.1
(22) Date of filing: 08.12.2004
(51) Int. Cl.: C08G 73/10, C25B 13/08, H01M 8/02

(54) **POLYIMIDE RESIN, METHOD FOR PRODUCING POLYIMIDE RESIN, AND ELECTROLYTE MEMBRANE, CATALYST LAYER, MEMBRANE/ELECTRODE ASSEMBLY AND DEVICE EACH CONTAINING POLYIMIDE RESIN**
POLYIMIDHARZ, VERFAHREN ZUR HERSTELLUNG VON POLYIMIDHARZ UND ELEKTROLYTMEMBRAN, KATALYSATORSCHICHT, MEMBRAN/ELEKTRODE-VERBUND UND VORRICHTUNG, JEWEILS POLYIMIDHARZ ENTHALTEND
RESINE POLYIMIDE, PROCEDE DE PRODUCTION ASSOCIE, ET MEMBRANE ELECTROLYTIQUE, COUCHE CATALYTIQUE, ENSEMBLE MEMBRANE/ELECTRODE ET DISPOSITIF CONTENANT CHACUN LADITE RESINE POLYIMIDE

(30) Priority: 08.12.2003 JP 2003409239
(43) Date of publication of application: 23.08.2006
(73) Proprietor: University of Yamanashi, Yamanashi 4008510 (JP)
(72) Inventor: WATANABE, Masahiro, 4000001 (JP); MIYATAKE, Kenji, 4000024 (JP); UCHIDA, Hiroyuki, 4000015 (JP)
(74) Representative: Daniels, Jeffrey Nicholas
(86) International application number: PCT/JP2004/018289
(87) International publication number: WO 2005/054339

(56) References cited:
- JP-A- 2002 105 200
- JP-A- 2003 234 014
- JP-A- 2004 155 998
- ASANO N. ET AL: 'Hydrolytically Stable Polyimide Ionomer for Fuel Cell Applications' CHEMISTRY OF MATERIALS vol. 16, no. 15, 27 July 2004, pages 2841 - 2843, XP002986937

## Description

### TECHNICAL FIELD

This invention relates to a polyimide resin, a method of producing a polyimide resin, and an electrolyte membrane, catalyst layer, membrane/electrode assembly and device each containing a polyimide resin.

### BACKGROUND ART

The fuel cell is a power generation device directly converting a chemical energy of oxygen and hydrogen into an electric energy, and has promise as a clean next-generation energy source not generating a greenhouse gas or harmful substances. Particularly, a proton-exchange membrane fuel cell (PEFC) or a direct methanol fuel cell (DMFC) is possible to reduce the size and weight and is also suitable as a power source for electric vehicles, household use and mobile devices.

In the fuel cell, the reaction opposite to the above can be carried out by charging the electric energy, so that the fuel cell can be also used as an apparatus for producing pure hydrogen through electrolysis of water (electrolytic cell). Further, the fuel cell can be used as a hydrogen sensor (electrochemical sensor) utilizing a potential difference based on the difference in hydrogen concentration between anode and cathode, or as an electrolytic sensor (for CO) feeding a gas to be detected to the anode and air to the cathode.

An electrolyte membrane used in the fuel cell or the electrolytic cell and the electrochemical sensor is an ion exchange membrane permeating only proton under wet conditions. At the present time, a membrane composed mainly of a high polymer of perfluoroalkyl sulfonic acid is used.

However, such a membrane can not be used in a high temperature operation because the proton conductivity and membrane strength above 100°C lower. Also, there are problems such as permeation of fuel gas, high cost and the like, which are a serious cause of obstructing the improvement of performances in the above devices.

In order to solve the above problems, there is examined the production of an electrolyte membrane by introducing a strong acidic group into an aromatic polymer. From viewpoint of the heat resistance, oxidative stability, mechanical strength, cost and easiness of introducing a substituent, a polyimide is considered to be a desirable structure as a basic skeleton. As to the polyimide electrolyte membrane, there are preciously reported some study examples. For example, a sulfonated polyimide is disclosed in JP-A-2000-510511 (corresponding to US Patent No. 6,245,881), JP-A-2002-105199 and Macromolecules, 35, 6707-6713 (2002).

Patent article 1: JP-A-2000-510511 (corresponding to US Patent No. 6,245,881),
Patent article 2: JP-A-2002-105199
Non-patent article 1: Macromolecules, 35, 6707-6713 (2002)

However, such polyimide resins are not sufficient in the hydrolytic stability, and the stability in water at 80°C for about 200 hours is only attained. In order to increase the proton conductivity, the large amount of sulfonic acid group should be introduced, but the stability lowers accompanied with the increase of the introducing amount of sulfonic acid group. Particularly, since the sulfonic acid group is introduced into a main chain of the polymer, the hydrolysis reaction of the main chain easily occurs and the lowering of the molecular weight becomes remarkable. Therefore, it is very difficult to establish the proton conductivity and the hydrolytic stability in the conventional electrolyte membranes.

### DISCLOSURE OF THE INVENTION

### PROBLEMS TO BE SOLVED IN THE INVENTION

Under the above situations, it is an object of the invention to provide a polyimide resin suitable for an electrolyte of a device for improving performances in the fuel cell, electrolytic cell and electrochemical sensor, and a method of producing the same.

### MEANS FOR SOLVING PROBLEMS

In order to solve the above problems, the invention is a polyimide resin having a basic skeleton represented by the following general formula: 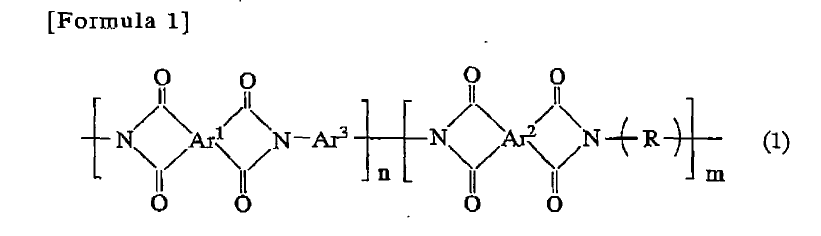 (in the formula (1), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. R is at least one of linear alkylene group and branched alkylene group having a carbon number of 1-20. Ar³ is an aromatic ring having a carbon number of 6-20 in which at least a part of hydrogen atoms is substituted with at least one of sulfoalkoxy group, carboalkoxy group and phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group. n and m show a polymerization degree and are an integer of not less than 2.)

In order to achieve the above object, the inventors have made examinations on the molecular structure of the polyimide compound. As a result of the inventors' studies, there has been found a method of producing a polyimide in which a linear and/or branched alkylene group is existent as a hydrophobic group in the main chain as mentioned above and at least one of a sulfoalkoxy group, a carboalkoxy group and a phosphoalkoxy group is existent as an acidic group in the side chain. In such an alkylpolyimide, the sulfonic acid group or the like is bonded to the alkoxy group but is not directly bonded to the aromatic ring in the main chain.

Since the imide bond in the main chain is made from an aliphatic diamine having a basicity higher than that of an aromatic diamine, the hydrolysis reaction (nucleophilic substitution of water) hardly occurs. Owing to the presence of the alkyl groups in the main chain and side chain, the main chain keeps a high hydrophobic atmosphere, and hence the membrane has a flexibility. For this end, it has been found that the proton conductivity and the oxidation-hydrolytic stability above 100°C are excellent, and as a result, the invention has been accomplished.

In the polyimide resin, the sulfonic acid group or the like and the main chain are rendered into a side chain type by bonding them through the alkoxy chain, and a part of the main chain is rendered into the alkylene chain, whereby the hydrolytic stability can be further improved without lowering the proton conductivity. Moreover, the term "a part of carbon atoms is substituted with S, N, O, SO₂ or CO" means not only a case that only the carbon atom is substituted, but also a case that hydrogen atom bonded to carbon atom is substituted.

The basic skeleton of the aforementioned polyimide resin is preferably represented by the following general formula (2): 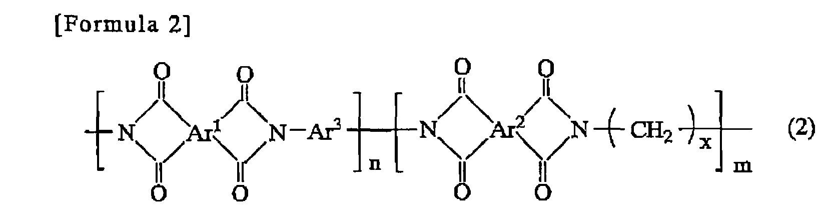 (in the formula (2), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. x shows the carbon number of an alkylene group and is an integer of 1-20. Ar³ is an aromatic ring having a carbon number of 6-20 in which at least a part of hydrogen atoms is substituted with at least one of sulfoalkoxy group, carboalkoxy group and phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group. n and m show a polymerization degree and are an integer of not less than 2.)

More preferably, it is represented by the following general formula (3): 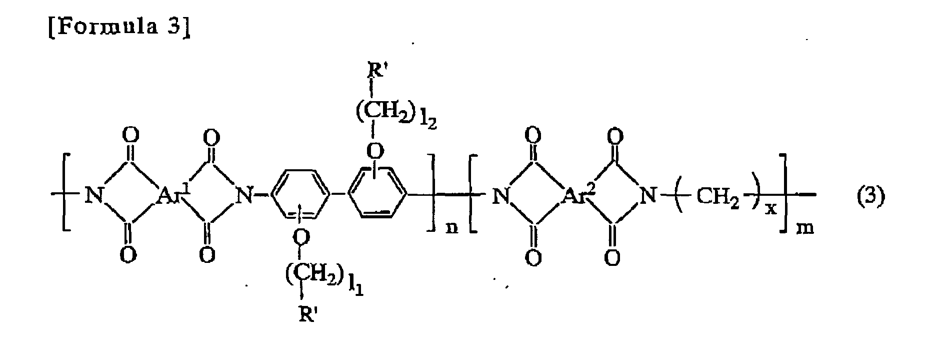 (in the formula (2), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. x shows the carbon number of an alkylene group and is an integer of 1-20. Ar³ is an aromatic ring having a carbon number of 6-20 in which at least a part of hydrogen atoms is substituted with at least one of sulfoalkoxy group, carboalkoxy group and phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group. n and m show a polymerization degree and are an integer of not less than 2.)

In a preferable embodiment of the invention, at least one of the sulfoalkoxy group, carboxyalkoxy group and phosphoalkoxy group represented by l₁ and l₂ in the formula (3) has a carbon number of 3 or 4. In this case, the synthesis of the polyimide resin by the following production method becomes easy and the availability thereof becomes easy.

In another preferable embodiment of the invention, n/m in the formulae (1)-(3) is not more than 95/5 but not less than 30/70.
In this case, the hydrolytic stability and proton conductivity of the polyimide resin can be improved.

In the other preferable embodiment of the invention, the polyimide resin has an average molecular weight of not less than 5000. In this case, when the electrolyte membrane or the like is formed from the polyimide resin, the strength and the like can be sufficiently increased.

Further, the invention is concerned with a method of producing a polyimide resin, characterized by comprising a dissolution step under heating a mixture of α, ω-alkylene diamine, a diamino compound represented by a general formula (4):

H₂N-Ar³-NH₂ (4)

(in the formula (4), Ar³ is an aromatic ring having a carbon number of 6-20 in which at least a part of hydrogen atoms is substituted with at least one of a sulfoalkoxy group, a carboalkoxy group and a phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group), a tertiary amine and an organic solvent; and
a polymerization step of adding the above mixture with an aromatic tetracarboxylic acid di-anhydride compound represented by a general formula (5) or (6): 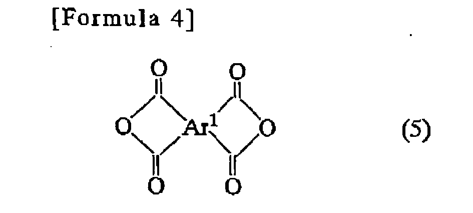 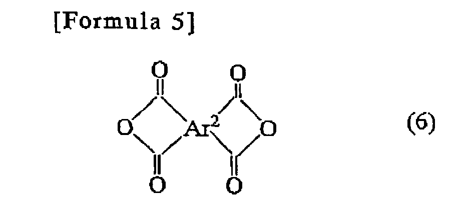 (in the formulae (5) and (6), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different.) and heating in the presence of an organic acid at a temperature of at least 40°C to obtain a polyimide resin.

According to the production method of the invention, there can be produced a polyimide resin having an excellent hydrolytic stability by bonding sulfonic acid group or the like to a main chain through an alkoxy chain to introduce an alkylene group into the main chain.

Moreover, the above production method may include a modification step of heating the polyimide resin to at least 150°C after the polymerization step to improve the physical properties of the polyimide resin, if necessary.

In the production method, a mixing ratio of the diamino compound to α, ω-alkylene diamine is not more than 95/5 but not less than 30/70 as a molar ratio. In this way, the hydrolytic stability and proton conductivity of the finally obtained polyimide resin can be further improved.

### EFFECT OF THE INVENTION

According to the invention, there can be provided a polyimide resin suitable for an electrolyte of a device for improving performances in the fuel cell, electrolytic cell and electrochemical sensor, and a method of producing the same.

### BRIEF DESCRIPTION OF DRAWING

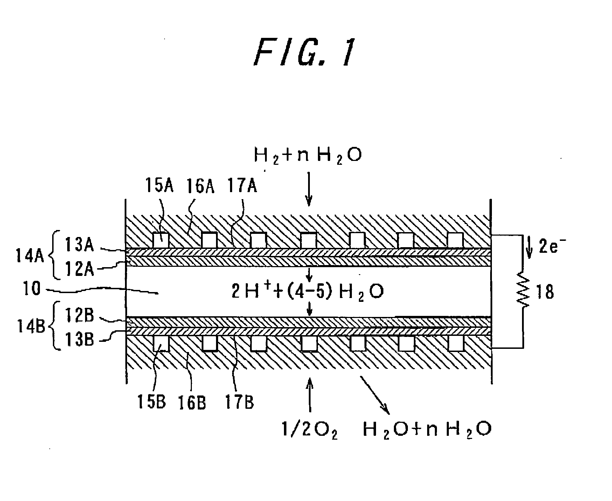

FIG. 1 is a configuration view showing an embodiment of the fuel cell of the invention.

### BEST MODE FOR CARRYING OUT THE INVENTION

### (Polyimide resin)

The polyimide resin according to the invention is represented by the aforementioned general formula (1). In the general formula (1), substituents preferable as Ar¹, Ar² and Ar³ are concretely shown as follows. Moreover, chemical structures shown by Ar¹, Ar² and Ar³ in the general formula (1) are not necessarily the same, and may be a copolymer or a mixture mixedly existing plural substituents.

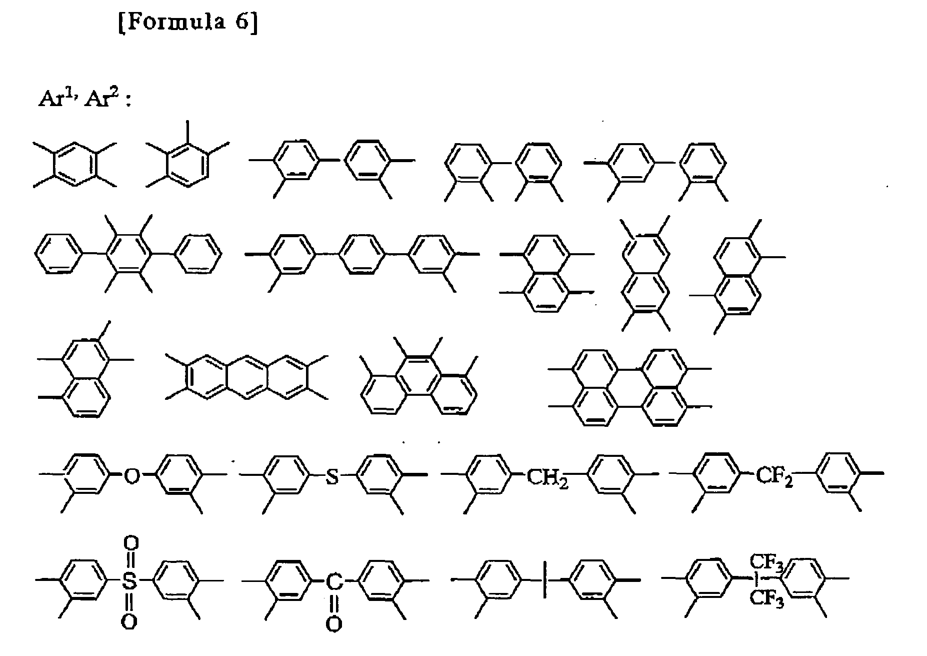

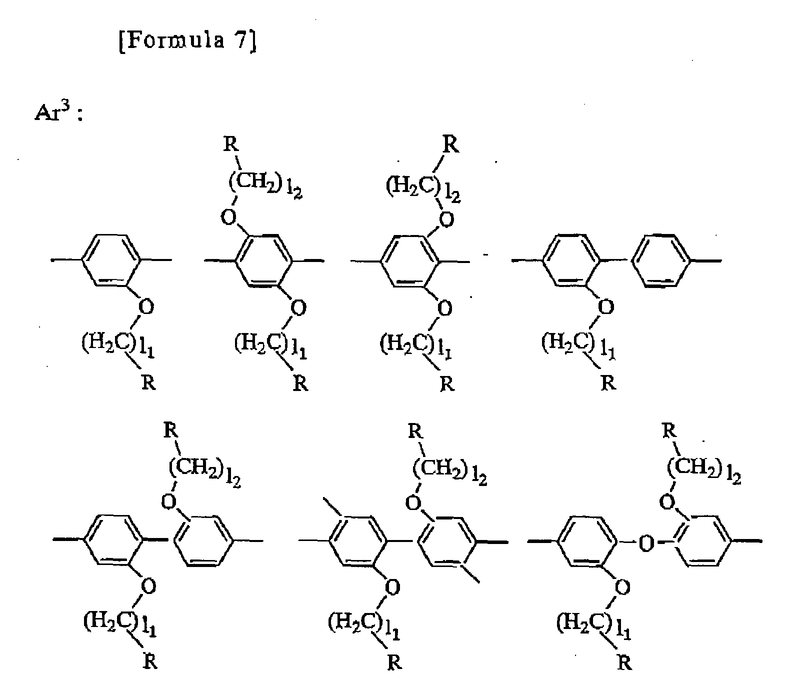

(R = SO₃H, COOH or PO(OH)₂)

Among them, the polyimide resin represented by the general formula (2) is preferable, and the polyimide resin represented by the general formula (3) is particularly preferable. In this case, the carbon number of the alkoxy group shown by l₁, l₂ in the general formulae (2) and (3) is preferable to be 3 or 4 in view of the easiness of the synthesis and the availability of starting materials.

The molecular weight of the polyimide resin represented by the general formulae (1)-(3) is not particularly limited, but the weight average molecular weight is desirable to be at least 5000 from a viewpoint of the strength of the electrolyte membrane.

Also, the values of n and m in the general formulae (1)-(3) are preferable to be not more than 95/5 but not less than 30/70 as n/m. When n/m is not more than 95/5, the hydrolytic stability of the polyimide resin can be improved, while when it is not less than 30/70, the proton conductivity can be improved. More preferably, it is not more than 80/20 but not less than 40/60.

Moreover, the polyimide resin is a copolymer having two structures in a parenthesis of the general formulae (1)-(3), in which the order of the two structure may be regular (block copolymer, alternating copolymer) or random.

### (Production method of polyimide resin)

Then, the method of producing the polyimide resin will be described with reference to an example. The production method of the polyimide resin according to the invention includes the following dissolution step and polymerization step.

In the dissolution step, a mixture of α, ω-alkylene diamine, a diamino compound represented by a general formula (4):

H₂N-Ar³-NH₂ (4)

(in the formula (4), Ar³ is an aromatic ring having a carbon number of 6-20 in which at least a part of hydrogen atoms is substituted with at least one of a sulfoalkoxy group, a carboalkoxy group and a phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group), a tertiary amine and an organic solvent is dissolved under heating.

As the α, ω-alkylene diamine is preferable an aliphatic diamine having an alkylene group with a carbon number of 1-20. The α, ω-alkylene diamine may be constituted with a single compound or constituted with plural compounds.

The diamino compound is a compound represented by the general formula (4), which can concretely include the followings:

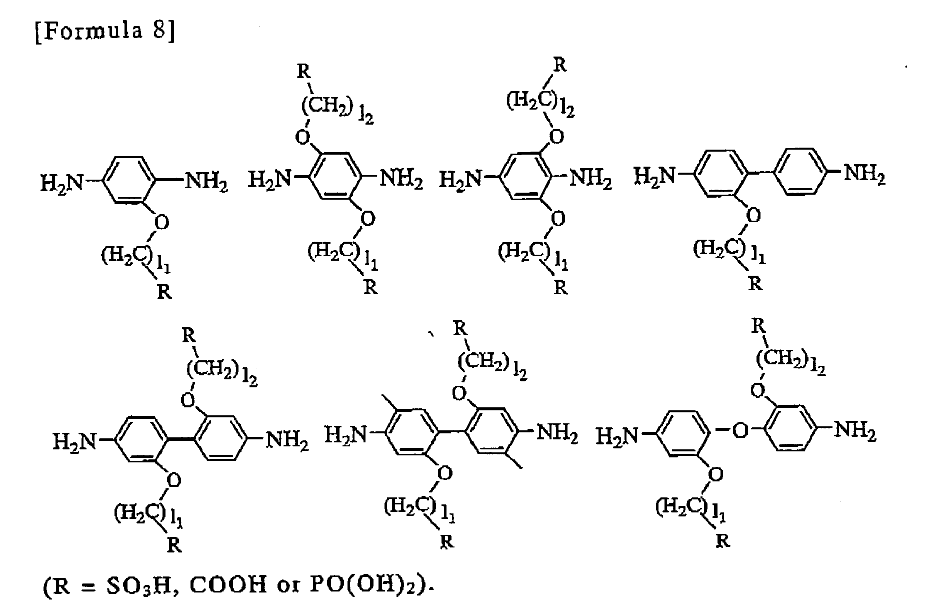

Among these compounds, at least one of 4,4'-diamino-2,2'-bis(sulfoalkoxy)biphenyl and 4,4'-diamino-3,3'-bis(sulfoalkoxy)biphenyl is particularly preferable. The above diamino compound may be constituted with a single compound or may be constituted with plural compounds.

The mixing ratio of the diamino compound to the α, ω-alkylene diamine is preferable to be not more than 95/5 but not less than 30/70 as a molar ratio. When the molar ratio is not more than 95/5, the hydrolytic stability of the resulting polyimide resin can be improved, while when it is not less than 30/70, the proton conductivity can be improved. More preferably, it is not less than 80/20 but not more than 40/60.

The tertiary amine is used for dissolving a diamino monomer having at least one of sulfonic acid group, carboalkoxy group and sulfoalkoxy group in an organic solvent. As the tertiary amine may be mentioned trimethylamine, triethylamine, tripropylamine, diazabicycloundecene and the like. Particularly, triethylamine is preferable. These tertiary amines may be used alone or in a combination of two or more.

The organic solvent is preferable to have a high boiling point and a high polarity and includes phenol, m-cresol, m-chlorophenol, p-chlorophenol, dimethylformamide, dimethylacetoamide, dimethylsulfoxide, N-methyl-2-pyrrolidine and the like. Particularly, m-cresol is preferable. These organic solvents may be used alone or in a combination of two or more.

Moreover, the mixture of the ddcorreaα, ω-alkylene diamine, diamino compound, tertiary amine and organic solvent is dissolved by heating, for example, at about 40-150°C.

In the polymerization step, the above dissolved mixture is added with the aromatic tetracarboxylic acid di-anhydride compound represented by the general formula (5) or (6) and polymerized by heating in the presence of an organic acid at a temperature of at least 40°C to obtain the aforementioned polyimide resin.

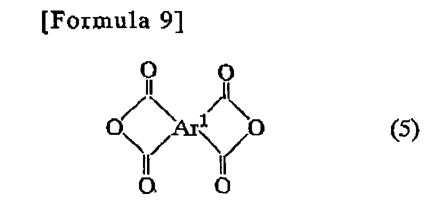

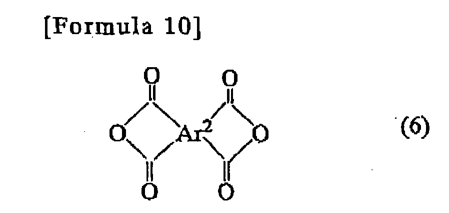

As the aromatic tetracarboxylic acid di-anhydride compound may be mentioned the following compounds.

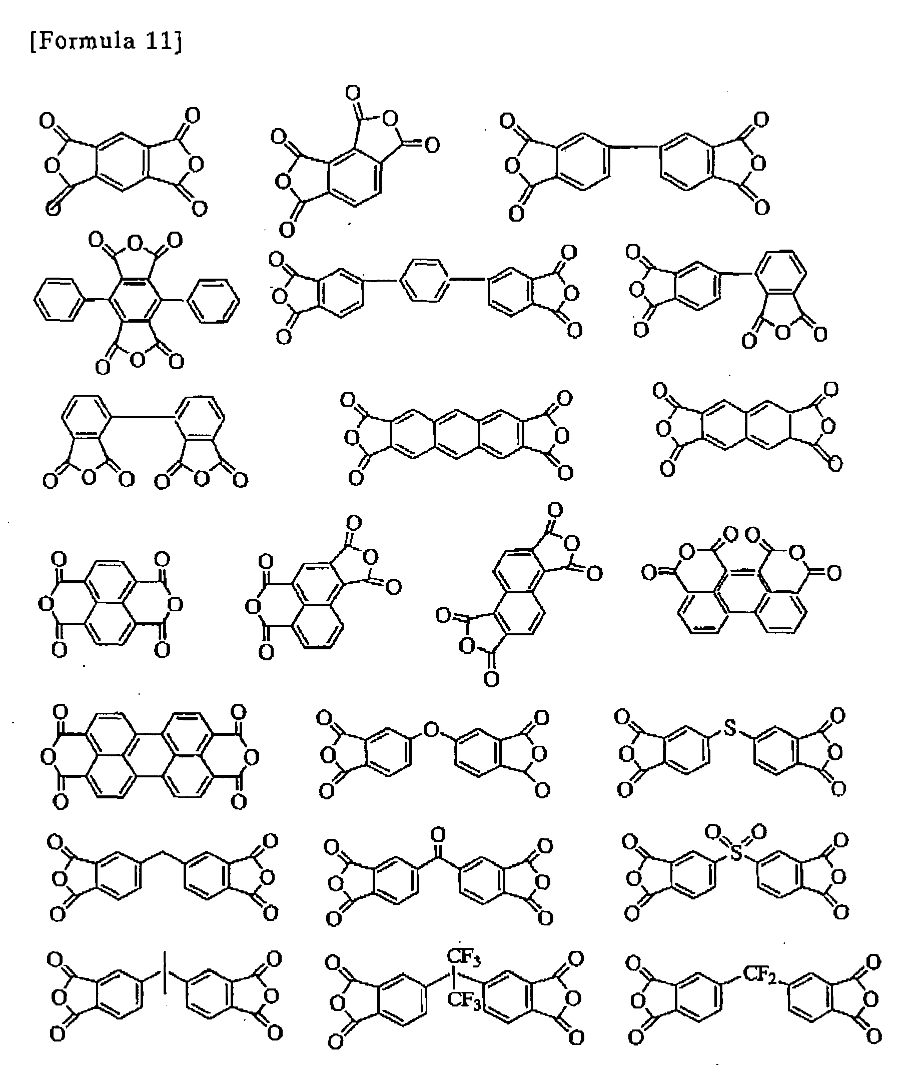

As the aromatic tetracarboxylic acid di-anhydride compound is preferable naphthalene-1,8:4,5-tetracarboxylic acid di-anhydride. The aromatic tetracarboxylic acid di-anhydride compound may be constituted with a single compound or may be constituted with plural compounds.

The reaction between (diamino compound + α, ω-alkylene diamine) and the aromatic tetracarboxylic acid di-anhydride compound proceeds at a molar ratio of 1:1. Therefore, the amounts of (diamino compound + α, ω-alkylene diamine) and the aromatic tetracarboxylic acid di-anhydride compound are adjusted so as to become a molar ratio of about 1:1.

The organic acid used in the polymerization step is a catalyst for cyclization reaction and promotes the formation of polyamic acid and the formation of imide ring based on the ring closure thereof. As the organic acid is desirable a compound having a high boiling point and a high solubility in a solvent, which includes benzoic acid, methylbenzoic acid, dimethylbenzoic acid, salicylic acid and the like. Particularly, benzoic acid is preferable.

Moreover, the organic acid may be added at the dissolution step unless it is existent in the polymerization step. The amount of the organic acid added is not particularly limited, but in case of benzoic acid, it is desirable to be added in a molar amount of about 1-6 times to the aromatic tetracarboxylic acid di-anhydride compound. Also, the temperature of heating the mixture is at least 40°C, preferably about 170-180°C, at which the polymerization reaction can be efficiently promoted to obtain a high molecular weight polyimide resin.

Further, a part of the alkylene groups shown by R in the general formula (1) can include a crosslinking structure. In this case, the amount of a crosslinking agent used is not particularly limited, but it is preferable to be a molar amount of 0.005-0.5 times to the aromatic tetracarboxylic acid di-anhydride compound.

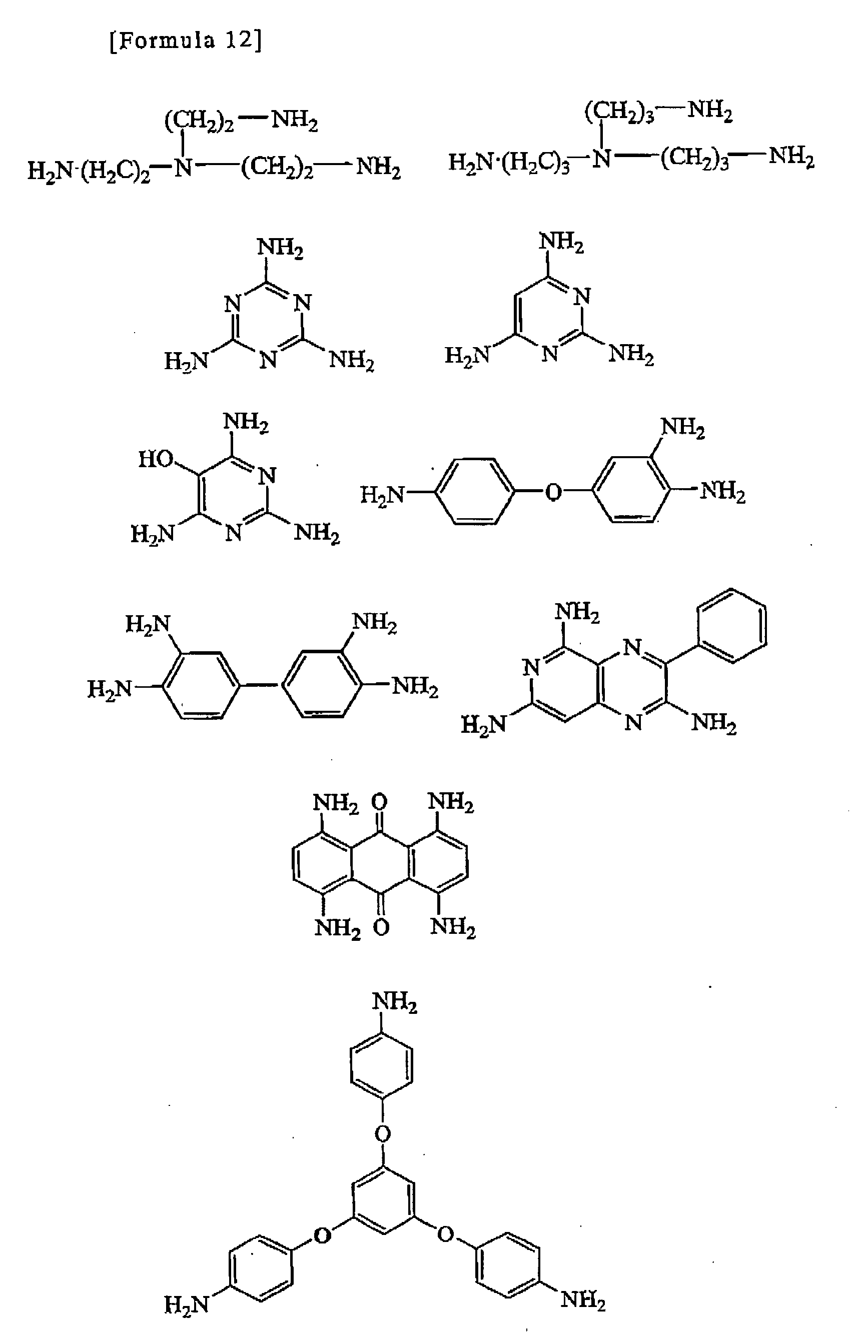

In the production method of the invention, the modification step can be conducted in addition to the above dissolution step and polymerization step. The modification step is a step wherein the structure defect in the resulting polyimide resin is corrected to improve the physical properties of the polyimide resin. The structure defect used herein means a non-closed ring portion in the polyimide resin (amic acid).

Concretely, the polyimide resin is heated to at least 150°C, preferably 190-220°C after the polymerization step. In this case, the polyimide resin is heated to a temperature higher than the polymerization temperature, so that the imidation of the non-closed ring portion in the polymer is promoted through the dehydration reaction, and hence the polyimide resin having no structure defect can be obtained.

### (Electrolyte membrane)

An electrolyte membrane can be produced by shaping a high polymer material composed mainly of the above polyimide resin into a membrane. The method of forming the membrane is not particularly limited, but there can be adopted a usual method such as a method of casting the solution onto a flat plate, a method of applying the solution onto a flat plate with a dye coater, a comma coater or the like, a spin coating method, a method of extruding a melted polymer material, or the like. As the polymer material, the polyimide resin is used alone, or it may bc mixed with the other polymer electrolyte or the like.

By using the polyimide resin having an excellent hydrolytic stability as an electrolyte membrane is improved the durability of the electrolyte membrane. Also, the membrane can be produced in a low cost as compared with the conventionally used fluorinated resin such as Nafion (registered trademark) or the like.

### (Catalyst layer)

An electrode catalyst layer can be formed by mixing the polyimide electrolyte with an electrode catalyst. The catalyst is not particularly limited, but a commercially available catalyst material can be used. For example, there can be used a catalyst obtained by dispersing fine particles of platinum or platinum alloy into carbon powder. This catalyst is mixed with a solution containing the polyimide electrolyte of the invention and, if necessary, the other binding agent or the like and then dried, whereby the surface of the catalyst can be covered with the electrolyte to obtain the catalyst layer.

### (Membrane/electrode assembly)

A membrane/electrode assembly (MEA) can be formed by sandwiching the polyimide electrolyte membrane according to the invention between the above catalyst layers. The method of sandwiching the electrolyte membrane between the catalyst layers is not particularly limited, but includes, for example, a hot press method and the like.

### (Fuel cell, electrolytic sensor, electrochemical sensor)

A fuel cell can be made by supplying a fuel and an oxidizing agent to reactive electrodes at both sides of the membrane/electrode assembly, respectively. Also, the assembly can be used as an electrolytic sensor or an electrochemical sensor by supplying water, steam, aqueous electrolyte solution, hydrogen mixed gas or the like thereto.

### EXAMPLE

### (Test Example 1)

Into a 100 mL four-necked flask provided with a sealed mercury thermometer, a nitrogen inlet port and a reflux tube are 0.6107 g (1.25 mmol) of 4,4'-diamino-3,3'-bis(sulfobutoxy)biphenyl (hereinafter referred to as 3,3'-BSBB, synthesized from 3,3'-dihydroxybenzidine), 0.2154 g (1.25 mmol) of 1,10'-decamethylene diamine (hereinafter referred to as DMDA, made by Tokyo Kasei Co., Ltd.), 0.70 mL (6 mmol) of triethylamine (made by Aldrich) and 10 mL of m-cresol, which is heated at 80°C under a nitrogen stream for 10 minutes. The resulting mixture is violently stirred to obtain a transparent homogeneous solution (dissolution step).

To the resulting mixed, solution are added 0.6705 g (2.50 mmol) of naphthalene-1,8:4,5-tetracarboxylic acid di-anhydride (hereinafter referred to as TCND, made by Aldrich), 1.250 g (10.23 mmol) of benzoic acid (made by Kanto Kagaku Co., Ltd.) and 7 mL of m-cresol. As a result, a reddish brown reaction solution is obtained. Thereafter, it is cooled to room temperature under a nitrogen stream and stirred for 24 hours. Then, it is heated at 175°C for 15 hours with stirring. The reaction solution becomes viscous (polymerization step).

Then, it is heated at 195°C under a nitrogen stream for 5 hours (modification step). After the heating, it is cooled to 60°C. As a result, a reddish brown viscous solution of polyimide copolymer is obtained.

Next, the polyimide copolymer is cast onto a glass substrate to form an electrolyte membrane. The casting method is carried out by casting the solution containing copolymer onto the glass substrate and air-drying at 60°C over a day. Thereafter, it is dried at 80°C under an atmospheric pressure for 12 hours and further dried under a reduced pressure at 80°C for 12 hours to form the electrolyte membrane.

In an infra-red absorption spectrum of the electrolyte membrane are observed absorption peaks of 2926, 2854 (ν_{CH}), 1706, 1665 (ν_{C=O}), 1579 (ν_{C=C}), 1345 (ν_{CN}), 1248, 1200 (ν_{S=O}) cm⁻¹. In ¹H-NMR spectrum of a sample obtained by dissolving the electrolyte membrane in a solvent (deuterated dimethylsulfoxide) are observed absorption peaks of 8.75 (Ar, naphthylene, 4H), 7.58 (Ar, biphenylene, 6H), 4.13 (CH₂, 4H), 2.35 (CH₂, 2H), 1.59 (CH₂, 8H) and 1.33 (CH₂, 4H) ppm. From these spectra, the resulting polyimider copolymer is confirmed to be a compound of the general formula (2) wherein Ar¹=Ar²= 1,4,5,8-naphthylene, n/m is 70/30, substitution position of sulfoalkoxy group is 3,3', l₁=l₂= 4 and x= 10.

### (Test Example 2)

A polyimide copolymer is prepared in the same manner as in Test Example 1 except that 4,4'-diamoni-3,3'-bis(sulfopropoxy)biphenyl (hereinafter referred to as 3,3'-BSPB) is used instead of 3,3'-BSBB and the sum of addition amounts thereof with DMDA is 2.0 mmol at the dissolution step, and an electrolyte membrane is prepared therefrom.

When the electrolyte membrane is subjected to the same analyses as in Test Example 1, the resulting polyimide copolymer is confirmed to be a compound of the general formula (2) wherein Ar¹=Ar²= 1,4,5,8-naphthylene, n/m is 70/30, substitution position of sulfoalkoxy group is 3,3', l₁=l₂= 3 and x= 10.

### (Test Example 3)

A polyimide copolymer is prepared in the same manner as in Test Example 2 except that 1,6-hexamethylene diamine is used instead of DMDA, and an electrolyte membrane is prepared therefrom. When the electrolyte membrane is subjected to the same analyses as in Test Example 1, the resulting polyimide copolymer is confirmed to be a compound of the general formula (2) wherein Ar¹=Ar²= 1,4,5,8-naphthylene, n/m is 70/30, substitution position of sulfoalkoxy group is 3,3', l₁=l₂= 3 and x=6.

### (Oxidative stability)

Each of the electrolyte membranes of Test Examples 1-3 is heated at 80°C in a Fenton's reagent (aqueous solution of 3% hydrogen peroxide containing 2 ppm of iron sulfate) to observe an appearance of the electrolyte membrane with the lapse of time. A time of starting the dissolution of the electrolyte membrane and a completely dissolving time are recorded. For the comparison, the same test for oxidative stability is applied to a commercially available fluorine-based film (Nafion 112) (Comparative Example 1) and an electrolyte membrane made form a polyimide copolymer of the general formula (2) wherein n/m is 70/30 and sulfonic acid group is directly bonded to 2,2'-site (Comparative Example 2), respectively.

### (Hydrolytic stability)

Each of the electrolyte membranes of Test Examples 1-3, the fluorine-based film of Comparative Example 1 and the electrolyte membrane of Comparative Example 2 is exposed to an atmosphere of high temperature and high humidity (140°C, 100% humidity) for 24 hours, and thereafter an appearance of the sample is observed.

### (Measurement of proton conductivity)

Each of the electrolyte membranes of Test Examples 1-3, the fluorine-based film of Comparative Example 1 and the electrolyte membrane of Comparative Example 2 is cut into a size of 5x40 mm, and an AC impedance is measured by a four-terminal method.
The measurement is carried out at 120°C and 100% relative humidity under conditions that a constant current is 0.005 mA and a sweep frequency is 10-20000 Hz. A proton conductivity is calculated from the measured impedance, a distance of the membrane between terminals (10 mm) and a membrane thickness (30 µm).

**[Table 1]**

| | Substitution position of sulfoalkoxy group | 11=12 | x | Dissolution start (hour:minute) | Complete dissolution (hour:minute) | Appearance | Proton conductivity (Scm⁻¹) |
|---|---|---|---|---|---|---|---|
| Test Example 1 | 3,3' | 4 | 10 | 0:54 | 2:00 | not broken | 0.12 |
| Test Example 2 | 3,3' | 3 | 19 | 0:55 | 2:10 | not broken | 0.15 |
| Test 3 Example 3 | 3,3' | 3 | 10 | 0:45 | 1:45 | not broken | 0.18 |
| Comparative Example 1 (fluorine-based film) | - | - | - | - | - | - | 0.10 |
| Comparative Example 2 (main chain type polyimide membrane) | 2,2' | 0 | 0 | 0:00 | 0:10 | broken | 0.15 |

As seen from Table 1, the samples of Test Examples 1-3 wherein the sulfonic acid group is bonded to the main chain through alkoxy chain can largely improve the hydrolytic stability of the membrane while maintaining the high proton conductivity and can keep the mechanical strength.

Also, the samples of Test Examples 1-3 become longer by not less than 10 times in the dissolution complete time in Fenton's reagent as compared with Comparative Example 2, from which it can be seen that the oxidative stability is considerably improved. Further, the samples of Test Examples 1-3 show a high proton conductivity as compared with the fluorine-based film of Comparative Example 1.

As seen from the above, the electrolyte membrane made of the polyimide resin of the invention in which the alkylene group is introduced into the main chain and the sulfonic acid group is bonded to the polyimide main chain through alkyl group can improve the hydrolytic stability and oxidative stability without damaging the proton conductivity.

### (Preparation of catalyst layer-membrane/electrode assembly)

In 10 mL of m-cresol/DMF (volume ratio: 1/9) are kneaded 1 g of carbon black highly dispersed with 30 wt% of platinum and 1.00 g of the polyimide resin of test Example 1. 0.15 mL of the resulting paste is uniformly applied onto a gas diffusion layer (area: 10 cm²) made from a wet-proof carbon paper and dried at 80°C for 2 hours. It is cold-pressed (10 kg/cm², 10 sec) and immersed in 400 mL of an ethanol solution of 1N nitric acid for 12 hours with stirring. After this acid treatment is further repeated two times, the resulting electrode catalyst is washed with ethanol and dried at 80°C for 2 hours. The acid-treated polyimide membrane (thickness: 50 µm, area: 10 cm²) is sandwiched between two electrode catalysts and hot-pressed to obtain a catalyst layer-membrane/electrode assembly

### [Test for fuel cell]

In FIG. 1 is schematically shown a structure of a fuel cell. The aforementioned catalyst layer-membrane/electrode assembly 11 is sandwiched between two gas diffusion electrodes 14A and 14B. On one main face side of the assembly 11 is arranged an anode-side gas diffusion electrode 14A formed by contacting an anode-side catalyst layer 12A with an anode-side wet-proof current collector 13A, while on the other main face side thereof is arranged a cathode-side gas diffusion electrode 14B formed by contacting a cathode-side catalyst layer 12B with a cathode-side wet-proof current collector 13B.

Further, a separator 16A having grooves 15A for the supply of reaction gas is contacted with a side of the anode-side gas diffusion electrode 14A opposite to the assembly 11, and a current collecting portion 17A is formed between the grooves 15A in the separator 16A. Similarly, a separator 16B having grooves 15B for the supply of reaction gas is contacted with the cathode-side gas diffusion electrode 14B, and a current collecting portion 17B is formed between the grooves 15B in the separator 16B.

A lead wire having a resistor 18 is connected between both the current collecting portions 16A and 16B and hydrogen is supplied to the anode side (200 mL/min, 90°C humidification) and oxygen is supplied to the cathode side (100 mL/min, 60°C humidification) to obtain a current-potential characteristic measured at 80°C as shown in Table 2.

**[Table 2]**

| Potential (V) | Current density (mA/cm²) |
|---|---|
| 0.9 | 26 |
| 0.7 | 1689 |
| 0.5 | 3260 |

As seen from Table 2, the fuel cell according to the invention has high performances.

Although the invention is explained in detail based on the embodiments of the invention with reference to the concrete examples, the invention is not limited to the contents and any modifications and variations are possible within the scope of the invention.

### INDUSTRIAL APPLICABILITY

The invention can be preferably used as an electrolyte membrane and a catalyst layer in devices such as a fuel cell, an electrolytic sensor, an electrochemical sensor and the like. Also, it can be preferably used in various devices inclusive of a membrane/ electrode assembly utilizing the electrolyte membrane and catalyst layer such as a fuel cell, an electrolytic sensor, an electrochemical sensor and the like.

## Claims

1. A polyimide resin having a basic skeleton represented by the following general formula: 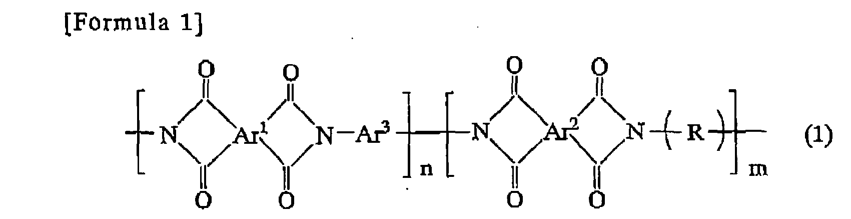 (in the formula (1), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. R is at least one of linear alkylene group and branched alkylene group having a carbon number of 1-20. Ar³ is an aromatic ring having a carbon number of 6-20 in which at least a part of hydrogen atoms is substituted with at least one of sulfoalkoxy group, carboalkoxy group and phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group. n and m show a polymerization degree and are an integer of not less than 2.)

2. A polyimide resin according to claim 1, wherein the basic skeleton is represented by the following general formula (2): 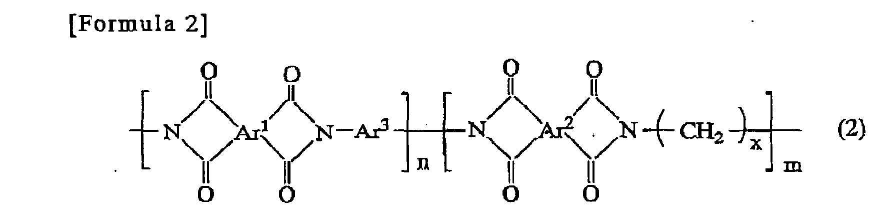 (in the formula (2), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. x shows the carbon number of an alkylene group and is an integer of 1-20. Ar³ is an aromatic ring having a carbon number of 6-20 in which at least a part of hydrogen atoms is substituted with at least one of sulfoalkoxy group, carboalkoxy group and phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group. n and m show a polymerization degree and are an integer of not less than 2.)

3. A polyimide resin according to claim 2, wherein the basic skeleton is represented by the following general formula (3): 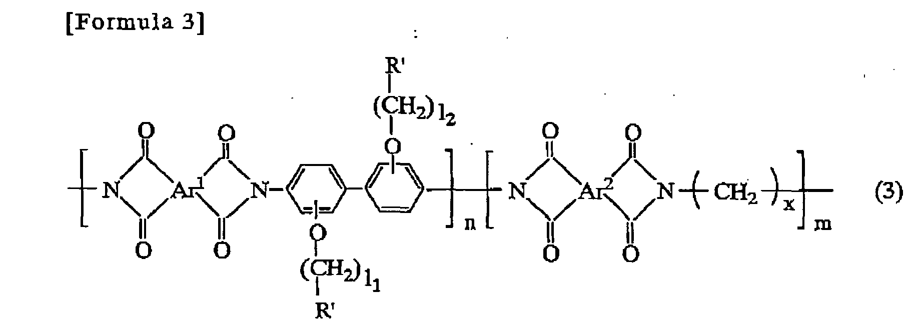 (in the formula (3), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different. Also, R' is at least one of a sulfonic acid group, a carboxylic acid group and phosphinic acid group, and each of l₁ and l₂ is a carbon number of at least one of a sulfoalkoxy group, a carboalkoxy group and a phosphoalkoxy group and is an integer of 1-20. l₁ and l₂ may be the same or different. In the formula (2), x shows a carbon number of an alkylene group and is an integer of 1-20.)

4. A polyimide resin according to claim 3, wherein the carbon number of at least one of a sulfoalkoxy group, a carboalkoxy group and a phosphoalkoxy group shown by l₁ and l₂ in the general formula (3) is 3 or 4.

5. A polyimide resin according to any one of claims 1 to 4,
wherein n/m in the general formulae (1)-(3) is not more than 95/5 but not less than 30/70.

6. A polyimide resin according to any one of claims 1 to 5,
wherein a part of at least one of the linear alkylene group and the branched alkylene group shown by R in the general formulae (1)-(3) includes a crosslinking structure.

7. A polyimide resin according to any one of claims 1 to 6,
wherein an average molecular weight is not less than 5000.

8. A method of producing a polyimide resin, **characterized by** comprising a dissolution step under heating a mixture of α, ω-alkylene diamine, a diamino compound represented by a general formula (4):
H₂N-Ar³-NH₂ (4)
(in the formula (4), Ar³ is an aromatic ring having a carbon number of 6-20 in which at least a part of hydrogen atoms is substituted with at least one of a sulfoalkoxy group, a carboalkoxy group and a phosphoalkoxy group having a carbon number of 1-20 and a part of carbon atoms in these groups may be substituted with S, N, O, SO₂ or CO, or a part of hydrogen atoms may be substituted with an aliphatic group, a halogen atom or a perfluoro aliphatic group), a tertiary amine and an organic solvent; and
a polymerization step of adding the above mixture with an aromatic tetracarboxylic acid di-anhydride compound represented by a general formula (5) or (6): 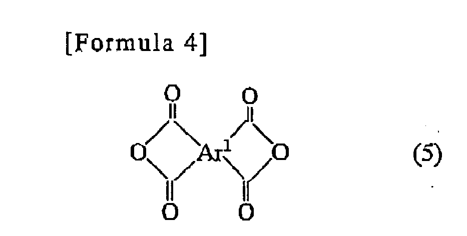 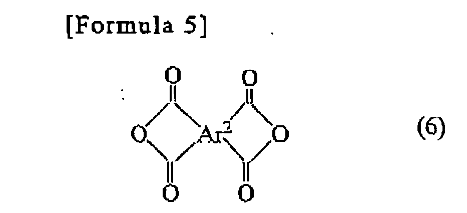 (in the formulae (5) and (6), each of Ar¹ and Ar² is an aromatic ring having a carbon number of 6-20, which forms an imide ring of 5 or 6 atoms with an imide group adjoining thereto. In the aromatic ring, a part of carbon atoms may be substituted with S, N, O, SO₂ or CO, or a part of hydrogen atoms may be substituted with an aliphatic group, a halogen atom or a perfluoro aliphatic group. Ar¹ and Ar² may be same or different.) and heating in the presence of an organic acid at a temperature of at least 40°C to obtain a polyimide resin.

9. A method of producing a polyimide resin according to claim 8, which further comprises a modification step of heating the polyimide resin to at least 150°C to improve the physical properties of the polyimide resin after the polymerization step.

10. A method of producing a polyimide resin according to claim 8 or 9, wherein the mixing amounts of the diamino compound and the α, ω-alkylene diamine are not more than 95/5 but not less than 30/70 as a molar ratio.

11. A method of producing a polyimide resin according to any one of claims 8 to 10, wherein the α, ω-alkylene diamine is an aliphatic diamine having an alkylene group with a carbon number of 1-20.

12. A method of producing a polyimide resin according to any one of claims 8 to 11, wherein the diamino compound of the general formula (4) is at least one of 4,4'-diamino-2,2'-bis(sulfoalkoxy)biphenyl and 4,4'-diamino-3,3'-bis(sulfoalkoxy)biphenyl.

13. A method of producing a polyimide resin according to any one of claims 8 to 12, wherein the tertiary amine is triethylamine.

14. A method of producing a polyimide resin according to any one of claims 8 to 13, wherein the organic solvent is m-cresol.

15. A method of producing a polyimide resin according to any one of claims 8 to 14, wherein the aromatic tetracarboxylic acid di-anhydride compound is naphthalene-1,8:4,5-tetracarboxylic acid di-anhydride.

16. An electrolyte membrane **characterized by** including a poluyimide resin as claimed in any one of claims 1 to 7.

17. A catalyst layer **characterized by** including a polyimide resin as claimed in any one of claims 1 to 7 and a given catalyst.

18. A membrane/electrode assembly **characterized by** joining an electrolyte membrane as claimed in claim 16 to a catalyst layer as claimed in claim 17.

19. A fuel cell **characterized by** including a membrane/electrode assembly as claimed in claim 18.

20. An electrolytic sensor **characterized by** including a membrane/electrode assembly as claimed in claim 18.

21. An electrochemical sensor **characterized by** including a membrane/electrode assembly as claimed in claim 18.

## Patentansprüche

1. Polyimid-Harz mit einem durch die folgende allgemeine Formel wiedergegebenen Grundgerüst: 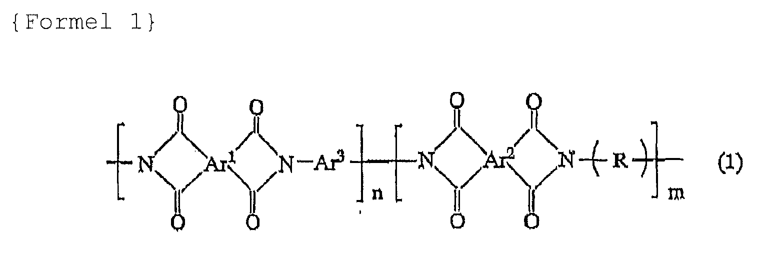 (in der Formel (1) ist jedes Ar¹ und Ar² ein aromatischer Ring mit einer Kohlenstoffzahl von 6-20, welcher einen Imid-Ring mit 5 oder 6 Atomen mit einer daran angrenzenden Imid-Gruppe ausbildet. In dem aromatischen Ring können ein Teil der Kohlenstoffatome durch S, N, 0, SO₂ oder CO substituiert sein oder ein Teil der Wasserstoffatome können durch eine aliphatische Gruppe, ein Halogenatom oder eine Perfluor-aliphatische Gruppe substituiert sein. Ar¹ und Ar² können gleich oder unterschiedlich sein. R ist mindestens eine lineare Alkylen-Gruppe oder eine verzweigte Alkylen-Gruppe mit einer Kohlenstoffzahl von 1-20. Ar³ ist ein aromatischer Ring mit einer Kohlenstoffzahl von 6-20, in dem mindestens ein Teil der Wasserstoffatome durch mindestens eine Sulfoalkoxy-Gruppe, Carboalkoxy-Gruppe oder Phosphoalkoxy-Gruppe mit einer Kohlenstoffzahl von 1-20 substituiert ist, wobei ein Teil der Kohlenstoffatome in diesen Gruppen durch S, N, 0, SO₂ oder CO oder ein Teil der Wasserstoffatome durch eine aliphatische Gruppe, ein Halogenatom oder eine Perfluor-aliphatische Gruppe substituiert sein kann. n und m bezeichnen den Polymerisationsgrad und sind ganze Zahlen nicht unter 2.)

2. Polyimid-Harz nach Anspruch 1, wobei das Grundgerüst durch die folgende allgemeine Formel (2) wiedergegeben wird: 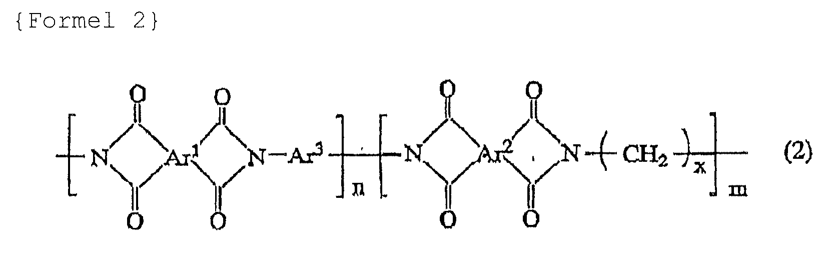 (in der Formel (2) ist jedes Ar¹ und Ar² ein aromatischer Ring mit einer Kohlenstoffzahl von 6-20, welcher einen Imid-Ring mit 5 oder 6 Atomen mit einer daran angrenzenden Imid-Gruppe ausbildet. In dem aromatischen Ring können ein Teil der Kohlenstoffatome durch S, N, 0, SO₂ oder CO substituiert sein oder ein Teil der Wasserstoffatome können durch eine aliphatische Gruppe, ein Halogenatom oder eine Perfluor-aliphatische Gruppe substituiert sein. Ar¹ und Ar² können gleich oder unterschiedlich sein. x gibt die Kohlenstoffzahl einer Alkylen-Gruppe an und ist eine ganze Zahl von 1-20. Ar³ ist ein aromatischer Ring mit einer Kohlenstoffzahl von 6-20, in dem mindestens ein Teil der Wasserstoffatome durch mindestens eine Sulfoalkoxy-Gruppe, Carboalkoxy-Gruppe oder Phosphoalkoxy-Gruppe mit einer Kohlenstoffzahl von 1-20 substituiert ist, wobei ein Teil der Kohlenstoffatome in diesen Gruppen durch S, N, 0, SO₂ oder CO oder ein Teil der Wasserstoffatome durch eine aliphatische Gruppe, ein Halogenatom oder eine Perfluor-aliphatische Gruppe substituiert sein kann. n und m bezeichnen den Polymerisationsgrad und sind ganze Zahlen nicht unter 2.)

3. Polyimid-Harz nach Anspruch 2, wobei das Grundgerüst durch die folgende allgemeine Formel (3) wiedergegeben wird: 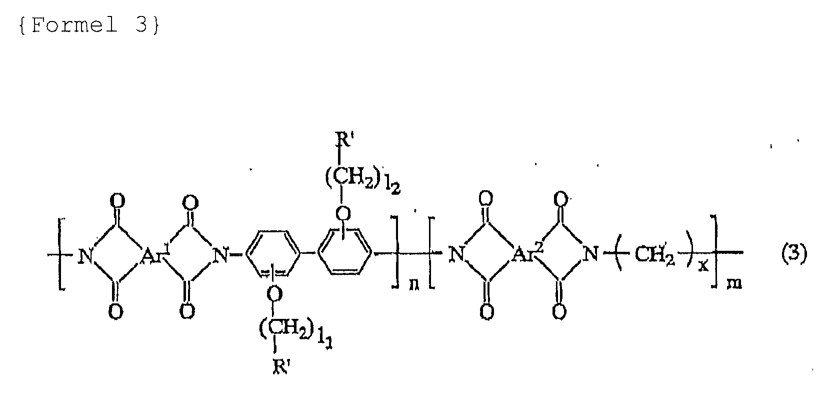 (in der Formel (3) ist jedes Ar¹ und Ar² ein aromatischer Ring mit einer Kohlenstoffzahl von 6-20, welcher einen Imid-Ring mit 5 oder 6 Atomen mit einer daran angrenzenden Imid-Gruppe ausbildet. In dem aromatischen Ring können ein Teil der Kohlenstoffatome durch S, N, O, SO₂ oder CO substituiert sein oder ein Teil der Wasserstoffatome können durch eine aliphatische Gruppe, ein Halogenatom oder eine Perfluor-aliphatische Gruppe substituiert sein. Ar¹ und Ar² können gleich oder unterschiedlich sein. Auch ist R` mindestens eine Sulfonsäure-Gruppe, eine Carboxylsäure-Gruppe oder eine Phospinsäure-Gruppe und l₁ und l₂ jeweils eine Kohlenstoffzahl mindestens einer Sulfoalkoxy-Gruppe, einer Carboalkoxy-Gruppe oder einer Phosphoalkoxy-Gruppe und eine ganze Zahl von 1-20 ist. l₁ und l₂ können gleich oder unterschiedlich sein. In der Formel (3) gibt x eine Kohlenstoffzahl einer Alkylen-Gruppe wieder und ist eine ganze Zahl von 1-20.

4. Polyimid-Harz nach Anspruch 3, wobei die Kohlenstoffzahl der mindestens einen in der allgemeinen Formel (3) durch l₁ und l₂ wiedergegebenen Sulfoalkoxy-Gruppe, Carboalkoxy-Gruppe oder Phosphoalkoxy-Gruppe 3 oder 4 beträgt.

5. Polyimid-Harz nach einem der Ansprüche 1 bis 4, wobei n/m in der allgemeinen Formel (1)-(3) nicht mehr als 95/5, und nicht weniger als 30/70 beträgt.

6. Polyimid-Harz nach einem der Ansprüche 1 bis 5, wobei ein Teil der mindestens einen in den allgemeinen Formeln (1)-(3) durch R wiedergegebenen linearen Alkylen-Gruppe oder verzweigten Alkylen-Gruppe eine Vernetzungsstruktur umfasst.

7. Polyimid-Harz nach einem der Ansprüche 1 bis 6, wobei das mittlere Molekulargewicht nicht unter 5000 liegt.

8. Verfahren zur Herstellung eines Polyimid-Harzes,
**gekennzeichnet dadurch, dass** das Verfahren umfasst:
- einen Lösungsschritt unter Erwärmen einer Mischung von α,ω-Alkylen-Diamin, einer durch die allgemeine Formel (4) wiedergegebene Diamin-Verbindung:
H₂N-Ar³-NH₂ (4)
(in der Formel (4) ist Ar³ ein aromatischer Ring mit einer Kohlenstoffzahl von 6-20, in dem mindestens ein Teil der Wasserstoffatome durch mindestens eine Sulfoalkoxy-Gruppe, Carboalkoxy-Gruppe oder Phosphoalkoxy-Gruppe mit einer Kohlenstoffzahl von 1-20 substituiert ist, wobei ein Teil der Kohlenstoffatome in diesen Gruppen durch S, N, 0, SO₂ oder CO oder ein Teil der Wasserstoffatome durch eine aliphatische Gruppe, ein Halogenatom oder eine Perfluor-aliphatische Gruppe substituiert sein kann), einem tertiären Amin und einem organischen Lösungsmittel; und
- einen Polymerisationsschritt, wobei zur oben genannten Mischung eine durch die allgemeinen Formeln (5) und (6) wiedergegebene aromatische Tetracarboxylsäure-dianhydrid-Verbindung zugegeben wird: 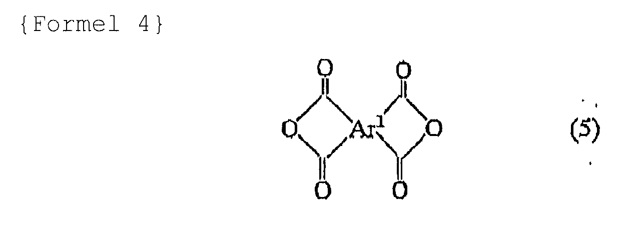 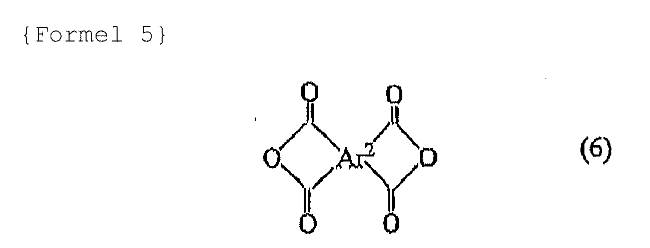
(in den Formeln (5) und (6) ist jedes Ar¹ und Ar² ein aromatischer Ring mit einer Kohlenstoffzahl von 6-20, welcher einen Imid-Ring mit 5 oder 6 Atomen mit einer daran angrenzenden Imid-Gruppe ausbildet. In dem aromatischen Ring können ein Teil der Kohlenstoffatome durch S, N, 0, SO₂ oder CO substituiert sein oder ein Teil der Wasserstoffatome können durch eine aliphatische Gruppe, ein Halogenatom oder eine Perfluor-aliphatische Gruppe substituiert sein. Ar¹ und Ar² können gleich oder unterschiedlich sein.) und Erwärmen in Gegenwart einer organischen Säure bei einer Temperatur von mindestens 40°C, um ein Polyimid-Harz zu erhalten.

9. Verfahren zur Herstellung eines Polyimid-Harzes nach Anspruch 8, wobei das Verfahren darüber hinaus einen Modifizierungsschritt umfasst, wobei das Polyimid-Harz auf mindestens 150°C erhitzt wird, um die physikalischen Eigenschaften des Polyimid-Harzes nach dem Polymerisationsschritt zu verbessern.

10. Verfahren zur Herstellung eines Polyimid-Harzes nach Anspruch 8 oder 9, wobei die Mischungsanteile der Diamin-Verbindung und des α,ω-Alkylen-Diamins im molaren Verhältnis nicht mehr als 95/5 und nicht weniger als 30/70 betragen.

11. Verfahren zur Herstellung eines Polyimid-Harzes nach einem der Ansprüche 8 bis 10, wobei das α,ω-Alkylen-Diamin ein aliphatisches Diamin mit einer Alkylen-Gruppe mit einer Kohlenstoffzahl von 1-20 ist.

12. Verfahren zur Herstellung eines Polyimid-Harzes nach einem der Ansprüche 8 bis 11, wobei die Diamin-Verbindung der allgemeinen Formel (4) mindestens 4,4'-Diamino-2,2'-bis(sulfoalkoxy)biphenyl oder 4,4`-Diamino-3,3`-bis(sulfoalkoxy)biphenyl ist.

13. Verfahren zur Herstellung eines Polyimid-Harzes nach einem der Ansprüche 8 bis 12, wobei das tertiäre Amin Triethylamin ist.

14. Verfahren zur Herstellung eines Polyimid-Harzes nach einem der Ansprüche 8 bis 13, wobei das organische Lösungsmittel m-Kresol ist.

15. Verfahren zur Herstellung eines Polyimid-Harzes nach einem der Ansprüche 8 bis 14, wobei die Tetracarboxylsäure-dianhydrid-Verbindung Naphthalen-1,8:4,5-tetracarboxylsäure-di-anhydrid ist.

16. Elektrolytische Membran, **dadurch gekennzeichnet, dass** sie ein Polyimid-Harz nach einem der Ansprüche 1 bis 7 umfasst.

17. Katalysatorschicht, **dadurch gekennzeichnet, dass** sie ein Polyimid-Harz nach einem der Ansprüche 1 bis 7 und einen vorgegebenen Katalysator umfasst.

18. Membran/Elektroden-Anordnung, **dadurch gekennzeichnet, dass** sie eine elektrolytische Membran nach Anspruch 16 mit einer Katalysatorschicht nach Anspruch 17 verbindet.

19. Brennzelle, **dadurch gekennzeichnet, dass** sie eine Membran/Elektroden-Anordnung nach Anspruch 18 umfasst.

20. Elektrolytischer Sensor, **dadurch gekennzeichnet, dass** er eine Membran/Elektroden-Anordnung nach Anspruch 18 umfasst.

21. Elektrochemischer Sensor, **dadurch gekennzeichnet, dass** er eine Membran/Elektroden-Anordnung nach Anspruch 18 umfasst.

## Revendications

1. Résine de polyimide ayant un squelette de base représenté par la formule générale suivante : 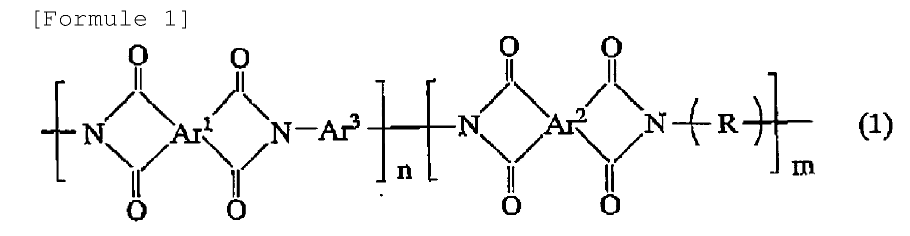 (dans la formule (1), chacun de Ar¹ et Ar² représente un noyau aromatique ayant un nombre d'atomes de carbone de 6 à 20, formant un noyau imide de 5 ou 6 atomes avec un groupe imide adjacent à ceux-ci. Dans le noyau aromatique, une partie des atomes de carbone peut être substituée par S, N, 0, SO₂ ou CO, ou bien une partie des atomes d'hydrogène peut être substituée par un groupe aliphatique, un atome d'halogène, ou un groupe perfluoro-aliphatique. Ar¹ et Ar² peuvent être identiques ou différents. R représente au moins un des groupes consistant en un groupe alkylène linéaire et un groupe alkylène ramifié ayant un nombre d'atomes de carbone de 1 à 20. Ar³ représente un noyau aromatique ayant un nombre d'atomes de carbone de 6 à 20, dans lequel au moins une partie des atomes d'hydrogène est substituée par au moins un des groupes consistant en un groupe sulfoalkoxy, un groupe carboalkoxy, un groupe phosphoalkoxy ayant un nombre d'atomes de carbone de 1 à 20 et une partie des atomes de carbone dans ces groupes peut être substituée par S, N, 0, SO₂ ou CO, ou bien une partie des atomes d'hydrogène peut être substituée par un groupe aliphatique, un atome d'halogène ou un groupe perfluoro-aliphatique. n et m représentent un degré de polymérisation et sont égaux à un nombre entier non inférieur à 2).

2. Résine de polyimide suivant la revendication 1, dans laquelle le squelette de base est représenté par la formule générale (2) suivante : 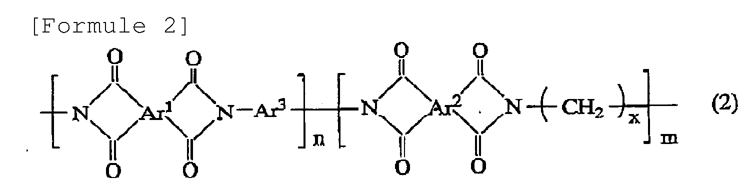 (dans la formule (2), chacun de Ar¹ et Ar² représente un noyau aromatique ayant un nombre d'atomes de carbone de 6 à 20, formant un noyau imide de 5 ou 6 atomes avec un groupe imide adjacent à ceux-ci. Dans le noyau aromatique, une partie des atomes de carbone peut être substituée par S, N, 0, SO₂ ou CO, ou bien une partie des atomes d'hydrogène peut être substituée par un groupe aliphatique, un atome d'halogène, ou un groupe perfluoro-aliphatique. Ar¹ et Ar² peuvent être identiques ou différents. x représente le nombre d'atomes de carbone d'un groupe alkylène et est égal à un nombre entier de 1 à 20. Ar³ représente un noyau aromatique ayant un nombre d'atomes de carbone de 6 à 20, dans lequel au moins une partie des atomes d'hydrogène est substituée par au moins un des groupes consistant en un groupe sulfoalkoxy, un groupe carboalkoxy, un groupe phosphoalkoxy ayant un nombre d'atomes de carbone de 1 à 20 et une partie des atomes de carbone dans ces groupes peut être substituée par S, N, 0, SO₂ ou CO, ou bien une partie des atomes d'hydrogène peut être substituée par un groupe aliphatique, un atome d'halogène ou un groupe perfluoro-aliphatique. n et m représentent un degré de polymérisation et sont égaux à un nombre entier non inférieur à 2).

3. Résine de polyimide suivant la revendication 2, dans laquelle le squelette de base est représenté par la formule générale (3) suivante : 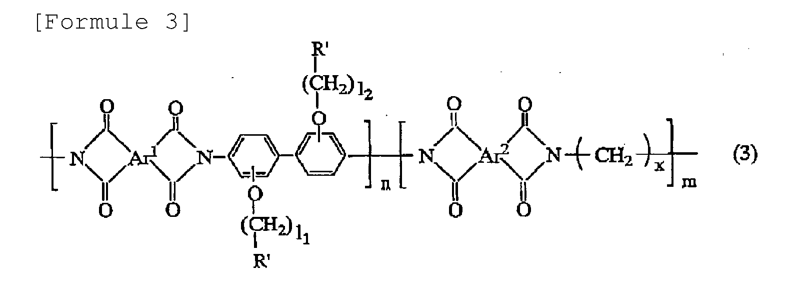 (dans la formule (3), chacun de Ar¹ et Ar² représente un noyau aromatique ayant un nombre d'atomes de carbone de 6 à 20, formant un noyau imide de 5 ou 6 atomes avec un groupe imide adjacent à ceux-ci. Dans le noyau aromatique, une partie des atomes de carbone peut être substituée par S, N, 0, SO₂ ou CO, ou bien une partie des atomes d'hydrogène peut être substituée par un groupe aliphatique, un atome d'halogène, ou un groupe perfluoro-aliphatique. Ar¹ et Ar² peuvent être identiques ou différents. En outre, R' représente au moins un des groupes consistant en un groupe acide sulfonique, un groupe acide carboxylique, un groupe acide phosphinique, et chacun de l₁ et l₂ représente un nombre d'atomes de carbone d'au moins un des groupes consistant en un groupe sulfoalkoxy, un groupe carboalkoxy, un groupe phosphoalkoxy et est égal à un nombre entier de 1 à 20. l₁ et l₂ peuvent être identiques ou différents. Dans la formule (2), x représente un nombre d'atomes de carbone d'un groupe alkylène et est égal à un nombre entier de 1 à 20).

4. Résine de polyimide suivant la revendication 3, dans laquelle le nombre d'atomes de carbone d'au moins un des groupes consistant en un groupe sulfoalkoxy, un groupe carboalkoxy et un groupe phosphoalkoxy représenté par l₁ et l₂ dans la formule générale (3) est égal à 3 ou 4.

5. Résine de polyimide suivant l'une quelconque des revendications 1 à 4, dans laquelle n/m dans les formules générales (1) à (3) est non supérieur à 95/5 mais est non inférieur à 30/70.

6. Résine de polyimide suivant l'une quelconque des revendications 1 à 5, dans laquelle une partie d'au moins un des groupes consistant en le groupe alkylène linéaire et le groupe alkyle non ramifié représenté par R dans les formules générales (1) à (3) comprend une structure de réticulation.

7. Résine de polyimide suivant l'une quelconque des revendications 1 à 6, dans laquelle le poids moléculaire moyen est non inférieur à 5000.

8. Procédé pour la production d'une résine de polyimide, **caractérisé en ce qu'**il comprend une étape de dissolution à chaud d'un mélange d'une α,ω-alkylènediamine, d'un composé à fonction diamino représenté par la formule générale (4) :
H₂N-Ar³-NH₂ (4)
(dans la formule (4), Ar³ représente un noyau aromatique ayant un nombre d'atomes de carbone de 6 à 20, dans lequel au moins une partie des atomes d'hydrogène est substituée par au moins un des groupes consistant en un groupe sulfoalkoxy, un groupe carboalkoxy et un groupe phosphoalkoxy ayant un nombre d'atomes de carbone de 1 à 20 et une partie des atomes de carbone dans ces groupes peut être substituée par S, N, 0, SO₂ ou CO, ou bien une partie des atomes d'hydrogène peut être substituée par un groupe aliphatique, un atome d'halogène ou un groupe perfluoro-aliphatique), d'une amine tertiaire et d'un solvant organique ; et
une étape de polymérisation comprenant l'addition au mélange précité d'un di-anhydride d'acide tétracarboxylique aromatique représenté par la formule générale (5) ou (6) : 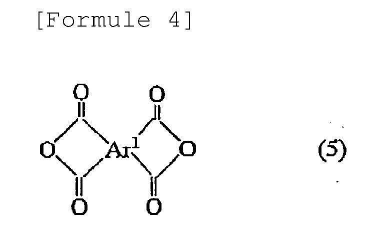 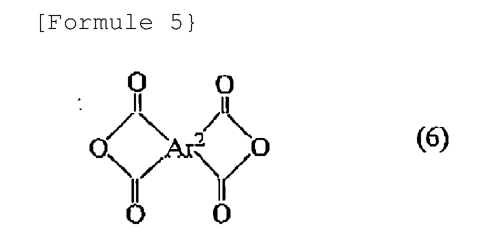 (dans les formules (5) et (6), chacun de Ar¹ et Ar² représente un noyau aromatique ayant un nombre d'atomes de carbone de 6 à 20, formant un noyau imide de 5 ou 6 atomes avec un groupe imide adjacent à ceux-ci. Dans le noyau aromatique, une partie des atomes de carbone peut être substituée par S, N, 0, SO₂ ou CO, ou bien une partie des atomes d'hydrogène peut être substituée par un groupe aliphatique, un atome d'halogène ou un groupe perfluoro-aliphatique. Ar¹ et Ar² peuvent être identiques ou différents) et un chauffage en présence d'un acide organique à une température d'au moins 40°C pour obtenir une résine de polyimide.

9. Procédé pour la production d'une résine de polyimide suivant la revendication 8, qui comprend en outre une étape de modification comprenant le chauffage de la résine de polyimide à au moins 150°C pour améliorer les propriétés physiques de la résine de polyimide après l'étape de polymérisation.

10. Procédé pour la production d'une résine de polyimide suivant la revendication 8 ou 9, dans laquelle les quantités mélangées du composé à fonction diamino et de l'α,ω-alkylènediamine sont non supérieures à 95/5 mais non inférieures à 30/70 en rapport molaire.

11. Procédé pour la production d'une résine de polyimide suivant l'une quelconque des revendications 8 à 10, dans lequel l'α,ω-alkylènediamine est une diamine aliphatique comprenant un groupe alkylène ayant un nombre d'atomes de carbone de 1 à 20.

12. Procédé pour la production d'une résine de polyimide suivant l'une quelconque des revendications 8 à 11, dans lequel le composé à fonction diamino de formule générale (4) est au moins un des composés consistant en la 4,4'-diamino-2,2'-bis(sulfoalkoxy)biphényle et le 4,4'-diamino-3,3'-bis(sulfoalkoxy)biphényle.

13. Procédé pour la production d'une résine de polyimide suivant l'une quelconque des revendications 8 à 12, dans lequel l'amine tertiaire est la triéthylamine.

14. Procédé pour la production d'une résine de polyimide suivant l'une quelconque des revendications 8 à 13, dans lequel le solvant organique est le m-crésol.

15. Procédé pour la production d'une résine de polyimide suivant l'une quelconque des revendications 8 à 14, dans lequel le di-anhydride d'acide tétracarboxylique aromatique est le di-anhydride d'acide naphtalène-1,8:4,5-tétracarboxylique.

16. Membrane électrolytique **caractérisée en ce qu'**elle renferme une résine de polyimide suivant l'une quelconque des revendications 1 à 7.

17. Couche de catalyseur **caractérisée en ce qu'**elle inclut une résine de polyimide suivant l'une quelconque des revendications 1 à 7 et un catalyseur donné.

18. Assemblage membrane/électrode **caractérisé par** la jonction d'une membrane électrolytique suivant la revendication 16 à une couche de catalyseur suivant la revendication 17.

19. Pile à combustible **caractérisée en ce qu'**elle inclut un assemblage membrane/électrode suivant la revendication 18.

20. Capteur électrolytique **caractérisé en ce qu'**il inclut un assemblage membrane/électrode suivant la revendication 18.

21. Capteur électrochimique **caractérisé en ce qu'**il inclut un assemblage membrane/électrode suivant la revendication 18.
